# EUROPEAN PATENT APPLICATION

(11) **EP 1 950 546 A1**
(43) Date of publication of application: **30.07.2008**
(21) Application number: 06722416.2
(22) Date of filing: 28.04.2006
(51) Int. Cl.: G01L 7/02, A47J 27/09

(54) **A PRESSURE-DETECTION METHOD AND DETECTION DEVICE FOR ELETRIC PRESSURE COOKER**

(30) Priority: 25.10.2005 CN 200510100475
(71) Applicant: Guangdong Elecpro Electric Appliance Holding Co., Ltd., Songgang, Nanhai Foshan Guangdong 528234 (CN)
(72) Inventor: JIAN, Weiwen, Guangdong 528234 (CN)
(74) Representative: Evans, Huw David Duncan
(86) International application number: PCT/CN2006/000838
(87) International publication number: WO 2007/048288

(57) **Abstract**

A pressure-detection method and detection device for electric pressure cooker is used for detecting continuously and accurately to control the pressure in the electric pressure cooker. The method comprises that a strainometer is provided on the periphery of a cooking pot of the electric pressure cooker, and a transmission arm is utilized to sense the expanding amount of the cooking pot and converts the expanding amount into a displacement, then makes the elastomer of the strainometer distorting; the distorting elastomer generates subsequently a controllable electric signal due to the electric characteristic of a sensitive foil, and the controllable electric signal is delivered to a central control unit, then control signals and display signals are outputted by the central control unit. The detection device comprises a strainometer, a transmission arm, a central control unit and the like. The strainometer is provided on the periphery of the cooking pot of the electric pressure cooker and is fixed by a proper way. The present invention can be used not only to detect and control the pressure of the electric pressure cooker and can be used for the household appliances also, such as electric iron, electric water heater and the like, the temperature and pressure of which need to be detected.

## Description

### Technical Field

The present invention relates to an electric pressure cooker, in particular to a pressure-detection method and the detection device for the electric pressure cooker.

### Background Art

A lot of control and detection methods have been adopted to ensure that the pressure within the cooking pot of an electric pressure cooker being controllable, or in other words, to ensure it not exceeding a certain safe pressure value. Wherein a CN Patent application "The pressure-control device for the electric pressure cooker", CN Application No. 200320116811.5, Application Date: Oct. 8, 2003, as shown in drawing 1, which disclosed a pressure-control device fixed between the frame and the bottom of the heating plate for the electric pressure cooker. A pressure bracket 33 on which an adjustable screw 24 is fixed is provided on the frame. A pressure switch 25 is fixed on the heating plate 22 through the fixing bracket 26 for the pressure switch. A heat insulation plate is fixed between said pressure switch 25 and the fixing bracket 26 for the pressure switch. The electric pressure cooker works as follows: If it is under the working station, when the pressure in the cooking pot 29 increased continuously, the cooking pot 29 will be expanded due to the pressure in it, meanwhile the heating plate 22 fixed on the bottom of the cooking pot 29 will move downwards due to the expansion of the cooking pot 29 and the pressure switch 25 will move downwards also due to the movement of the fixing bracket 26 for the pressure switch. When the touching sheet 51 of the pressure switch 25 is touched by the adjustable screw 24 fixed on the pressure bracket 33, the pressure switch 25 will cut off the electricity power supply automatically; When the pressure in the cooking pot 29 decreased, the cooking pot 29 and the heating plate 22 will be reset upwards by the elastic equipment fixed under the heating plate, thus the pressure switch 25 will be separated from the adjustable screw 24.

Although the device mentioned above can control the pressure in the pressure cooker, since the contact head switch with contact point is used, when the pressure in the cooker goes beyond the set point, it is not extremely necessary to cut off the electricity power supply directly by control; In addition, the device can detect and control only one pressure point and can not detect and control the pressure points in the cooker continuously, besides with different steamed and boiled foods need different temperature or pressure to cook, it's not convenient and effective for the device to detect, adjust and control them. For example, when the soup or the rice is being cooked or the meat which is not easy to be well done is being cooked, the temperature and pressure needed are different.

### Content of the invention

The object of the present invention is to overcome the shortcomings in the prior art and to provide a method and a device which can be used to measure the deformation extent of the cooking pot continuously so as to detect and control the pressure in the cooker of the electric pressure cooker continuously and accurately.

It is well known that the pressure in the electric pressure cooker relates to some factors such as the temperature in the cooker and the properties of the food being steamed or boiled in the cooker, i.e. the temperature of the cooker is not the unique factor effecting on the pressure in it. If only the temperature in the cooker is detected to confirm the pressure in it, the error will be considerably high. The deformation extent of the cooking pot is proportional approximately to the pressure in the cooker; The cooking pot will be expanded and deformed when the pressure in it increased; Especially, when the lower part of the heating plate of the electric pressure cooker is fixed on the bottom of the electric pressure cooker by use of an elastic pole, due to a moving space be moved up and down freely in some extent between the heating plate and the bottom of the electric pressure cooker, the deformation extent of the cooking pot will respond directly to the displacement extent of the heating plate moving downwards. Therefore the continuous direct detection of each tiny expansion and deformation extent of the cooking pot or detection of the displacement extent of the heating pale moving downwards are closed to the direct detection of the pressure of the cooking pot.

To achieve the object mentioned above, the present invention provides a detection method far from the prior art. The detection method of the present invention uses mainly a strainometer as the detection device which is used to detect each tiny expansion and deformation extent of the cooker, or to detect the displacement extent of the heating plate. The strainometer is consisted mainly of the base adhesive, sensitive foil, elastic base and so on. The sensitive foil is adhered to the elastic base by the base adhesive. When the elastic base is deformed due to the external force, the sensitive foil adhered to it will be deformed correspondingly. Accordingly, the electric characteristic of the sensitive foil will be changed also, since the change of the electric characteristic can cause different controllable electrical signals, if these signals were detected, the pressure in the cooker could be detected.

The detection method of the present invention is as the follows: A pressure-detection method for the electric pressure cooker, which uses a strainometer as the detection device. The strainometer is fixed on a proper position between the shell and cooking pot of the pressure cooker, and the expansion extent of the cooking pot is detected by a transmission arm. When the cooking pot expands, the expansion extent of the cooking pot will be converted to a displacement extent by the transmission arm so as to make the elastic base of the strainometer deform; Thereby the deformed elastic base will change the electric characteristic of the sensitive foil adhered to it; The controllable electric signal caused by the change of the electric characteristic will be sent to the central controller. The received electric signal will be operated by the central controller and then the controlling and displaying signals will be transmitted.
Generally, the strainometer is used to be a weighting sensor acting as a weighting detection sensor of a gauge; In addition it is also used to be a sensor to detect the strain capacity of a building and a building component. But so far, nobody mentioned it and used it in the field of electrical household appliances, or used it furthermore to detect the deformation extent of the cooking pot of the electric pressure cooker so as to detect the pressure in the electric pressure cooker. The pressure in the cooking pot of the electric pressure cooker can be detected continuously by the strainometer based on each tiny deformation and expansion parameters of the cooking pot when the method mentioned above is applied; The controllable signal caused by the deformation of the strainometer will be received and operated by the central controller, therefore the pressure in the cooker of the electric pressure cooker can be controlled and displayed continuously by the central controller. When the method is used, the detection precision of the pressure in the electric pressure cooker and the gradation detecting precision will be increased greatly, besides it can be used to detect and control continuously the pressure value in the electric pressure cooker. Comparing with the prior art, the present method has unexpected technical effect.

To achieve the method mentioned above, the structure applied by the present invention is as the followings: A pressure-detection device for the electric pressure cooker consisted of a strainometer, a transmission arm, a central controller and so on. The strainometer and transmission art are fixed in a proper position between the shell and the cooking pot of the pressure cooker. One end of the strainometer is fixed by a proper way, for example the strainometer is fixed on the inner wall of the shell or on the bottom of the shell of the pressure cooker.

The said strainometer mentioned is consisted mainly of a base adhesive, sensitive foil, elastic base and so on, and the sensitive foil is adhered to the elastic base by the base adhesive. When the elastic base is deformed due to the external force, the sensitive foil adhered to it will be deformed correspondingly. Accordingly, the electric characteristic of the sensitive foil will be changed also, since the change of the electric characteristic can cause a different controllable electrical signal, and if these signals were detected, the pressure in the cooker could be detected.

The said transmission arm may be a pole, a plate and the like in shape which can be made by metal or non-metal material. If the strainometer is fixed in the side space of the cooking pot, one end of the transmission arm will contact directly with the side wall of the cooking pot, the other end will contact directly with the elastic base of the strainometer; besides the transmission arm itself is supported by a proper structure. If the strainometer is fixed on the lower part of the cooking pot, the transmission arm could contact directly with the bottom of the cooking pot or contact or connect directly with the bottom of the heating plate, the other end contact or connect directly with the elastic base of the strainometer; In addition the transmission arm can be a branch arm fixed on the heating plate, or the core pole of the elastic pole on the bottom of the heating plate can be used directly as the transmission arm. No matter what kind of the transmission arm is used, the deformation extent of the cooking pot must be transferred to the strainometer and the transmission arm must be supported also by a proper way. Of course, if the strainometer has a very good heat resistance, the transmission arm may be omitted and the strainometer contacted directly with the exterior wall of the cooking pot or with the bottom of the heating plate that is one of the equal application schemes also.

It is better to install a heat-insulation block between the transmission arm and the elastic base of the strainometer or the heating plate so as to decrease the heat conduction quantity of the transmission arm to reduce the negative effects of the heat in the pressure cooker on the strainometer. Of course, if the transmission arm itself is made by the non-metallic heat insulation materials, the heat insulation block will not be a necessary part.

The heating plate mentioned above is directed at the electric heater, electromagnetic conversion heater or other kind of heaters, which is placed on the lower part of the cooking pot and its upper surface contact directly and closely with the bottom of the cooking pot. An elastic pole composed of a core pole and a spring for the core pole is fixed on the lower part of the heating plate; the core pole and the heating plate is an integrate structure. The elastic pole is fixed on the bottom plate of the pressure cooker under the heating plate. When the pressure cooker is not heated, the heating plate is supported by the spring for the core pole of the elastic pole based on the bottom plate of the pressure cooker; When the pressure in the cooker increased, the cooking pot will be deformed to force the heating plate move downwards so that the spring for the core pole is compressed and the core pole of the elastic pole in the passage hole of the bottom plate of the pressure cooker moved downwards. The bottom plate of the pressure cooker may be an individual component or a plate on the bottom of the frame.

The central controller is fixed on the side wall of the shell of the pressure cooker; of course it can also be fixed on the outer surface of the cover of the pressure cooker or in the space between the lower part of the shell and the bottom plate of the pressure cooker. The central controller is a control equipment composed of a signal receiving circuit, operational circuit, memorizer, signal output circuit and so on. It does not mean that the central controller must comprise all of the control components mentioned above. The strainometer is connected with the central controller; Besides, the central controller connected electrically also with the power switch, displaying equipment, electro-motional discharge valve of the pressure cooker; The displaying equipment mainly means at the liquid crystal digital display, lamplight, sound displays and so on; The electro-motional discharge valve mainly means the electro-driving and controlling valves which is used to discharge the high pressure gas from the cooker. Meanwhile, the central controller is connected with the signals of the remote controllers such as the computer controlling centre, remote controller unit, household intelligent module and so on, to achieve the intelligent and remote control and detection.

Several strainometers and the corresponding transmission arms may be fixed simultaneously on the periphery of the cooking pot. Each strainometer is connected electrically with the central controller.

The devices mentioned above can be used to detect continuously each tiny expansion and deformation extent of the cooking pot due to use of the strainometer so that continuous detection and control of the pressure in the cooker can be achieved conveniently; The expansion and deformation extent of the cooking pot is transmitted by the transmission arm fixed between the strainometer and the cooking pot and the heat insulation block is fixed, therefore the strainometer can be separated from the cooking pot or the heating plate so as to avoid the high temperature section of the pressure cooker, thus the strainometer operate stably, it's life is lengthened and the temperature error of it can be decreased. The strainometer can be used to continuously detect and transmit the corresponding signals, so that the pressure in the cooker can be detected and controlled continuously by the central controller, for example, cutting off the power supply, turning on the discharge valve and so on. The central controller is also helpful to directly observe and display the pressure in the cooker. If the central controller is connected with the signals of the remote controllers, the function of remote control can also be achieved so that the intelligent household management and design will be easy to achieve. Beside, since different food needs disparate pressure, if the preset parameter is compared by the central controller with the pressure in the cooker detected continuously by the strainometer, the pressure in the cooker can also be controlled in reverse.

Based on the structure mentioned above, a temperature sensor can be fixed in the space nearby the periphery of the cooking pot, or on the inner surface of the cover to detect the temperature in the cooker. The temperature sensor is connected with the central controller, therefore the pressure cooker can be controlled and detected by the central controller based on the pressure, temperature and the like of it.

The present invention can not only be used to detect and control the pressure of the electric pressure cooker, but can be used for the household appliances such as the electric water heater, electric iron also, the pressure and temperature of which need to be detected.

### Description of the drawings

Embodiments of the present invention will now be described, by way of examples only and with reference to the accompanying drawings, of which:

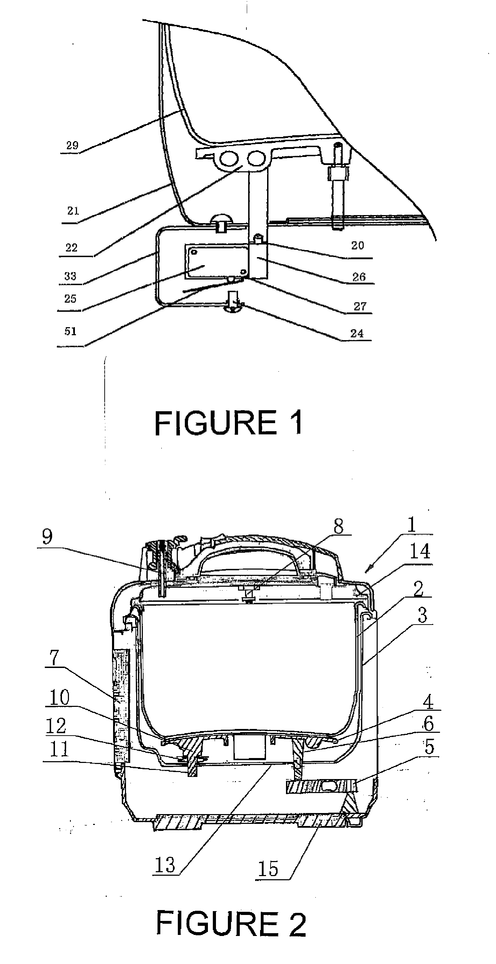

Fig 1 illustrates the structure of a pressure cooker according to the prior art; and
Fig 2 illustrates the structure of a pressure cooker according to the present invention.

Wherein: 1-pressure cooker, 2-cooking pot, 3-frame, 4-heating plate of the pressure cooker, 5-strainometer, 6-transmission arm, 7-central controller of the pressure cooker, 8-temperature sensor, 9-electromotional discharge valve, 10- elastic pole of the heating plate, 11-core pole of the elastic pole, 12-spring for the core pole of the elastic pole, 13-bottom plate of the pressure cooker, 14-cover, 15-bottom of the shell of the pressure cooker.

### Detailed description of embodiments

As shown in drawing 2, the pressure cooker 1 consists of a cooking pot 2, a frame 3, a heating plate 4, elastic pole 10 of the heating plate, bottom plate 13, cover 14 and so on. Bottom plate 13 of the pressure cooker is formed by the bottom of the frame 3; elastic pole 10 is fixed on the lower part of the heating plate 4 and on the bottom plate 13 of the lower part of the pressure cooker. The elastic pole 10 is composed of the core pole 11 and the spring 12 for the core pole. When the pressure cooker is not heated, the heating plate 4 is supported by the spring 12 for the core pole of the elastic pole 10 based on the bottom plate 13; When the pressure in the cooker increased, the cooking pot 2 will be deformed to force the heating plate 4 move downwards. The spring 12 for the core pole of the elastic pole 10 is compressed, the core pole 11 of the elastic pole 10 moved downwards in the passage hole of the bottom plate 13.

The strainometer 5 is fixed between the bottom 15 of the shell of the pressure cooker and the bottom plate 13 of the pressure cooker, and the one end of it is fixed on the bottom 15 of the shell of the pressure cooker; The one end of the transmission arm 6 is fixed on the bottom of the heating plate 4, the other end of it contact directly with the free end of the elastic base of the strainometer 5. The central controller 7 is fixed on the side wall of the shell of the pressure cooker. The strainometer 5 is connected electrically with the central controller 7.

The temperature sensor 8 is fixed on the inner wall of the cover of the pressure cooker. The temperature sensor 8 is connected electrically also with the central controller 7.

To reduce the effect of the temperature in the cooker on the temperature of the strainometer, it's better to install a heat insulation block (not shown in the drawings) between the strainometer 5 and the transmission arm 6.

The electro-motional discharge valve 9 is fixed on the cover 14 of the pressure cooker 1 so that the pressure or the temperature in the cooker will not exceed the danger limit or the preset control value. The electro-motional discharge valve 9 is controlled by the central controller 7. When the discharge valve 9 discharges, the temperature and pressure in the cooker will decrease simultaneously.

## Claims

1. A pressure-detection method for an electric pressure cooker, **characterized in that** a strainometer is used to be the detection equipment, the strainometer is fixed in a proper position between the shell and the cooking pot of the pressure cooker, and a transmission arm is used to detect the expansion extent of the cooking pot; when the cooking pot expanded due to a high pressure, the expansion extent of the cooking pot will be converted to a displacement extent by the transmission arm to force the elastic base of the strainometer being deformed accordingly; the deformed elastic base of the strainometer will change the electrical characteristic of the sensitive foil adhered to it correspondingly; the controllable signals caused by the change of the electrical characteristic are transmitted to the central controller; the received signals are operated by the central controller, and then the control signals and display signals are transmitted.

2. A pressure-detection device for an electric pressure cooker, **characterized in that** the strainometer and the transmission arm are fixed in a proper position between the shell and the cooking pot of the pressure cooker; one end of the transmission arm contacts directly with the exterior surface of the cooking pot or with the bottom of the heating plate, the other end of it contact directly with the elastic base of the strainometer; the strainometer is connected electrically with the central controller of the pressure cooker.

3. A pressure-detection device for the electric pressure cooker according to claim 2, **characterized in that** a heat insulation block is also fixed between the transmission arm and the strainometer.

4. A pressure-detection device for the electric pressure cooker according to claim 3, **characterized in that** an electro-motional discharge valve is also fixed on the cover, and it is connected electrically with the central controller of the pressure cooker.

5. A pressure-detection device for the electric pressure cooker according to claims 4, **characterized in that** a temperature sensor is fixed on the inner surface of the cover of the pressure cooker, the temperature sensor is connected electrically with the central controller of the pressure cooker.

6. A pressure-detection device for the electric pressure cooker according to claims 2, 3, 4 or 5, **characterized in that** the central controller is connected electrically with the display equipment.

7. A pressure-detection device for the electric pressure cooker according to claims 6, **characterized in that** the central controller is connected with the signals of the remote controllers.
